(19) Europäisches Patentamt / European Patent Office / Office européen des brevets

(11) **EP 4 570 749 A1**

(12) **EUROPEAN PATENT APPLICATION**

(43) Date of publication:
18.06.2025 Bulletin 2025/25

(21) Application number: 24167468.8

(22) Date of filing: 28.03.2024

(51) International Patent Classification (IPC):
$C01B\ 25/45$ (2006.01)   $B82Y\ 30/00$ (2011.01)
$H01M\ 4/04$ (2006.01)   $H01M\ 4/136$ (2010.01)
$H01M\ 4/36$ (2006.01)   $H01M\ 4/58$ (2010.01)
$H01M\ 4/62$ (2006.01)   $H01M\ 10/052$ (2010.01)
$H01M\ 10/0525$ (2010.01)   $H01M\ 4/1397$ (2010.01)
$D01F\ 9/16$ (2006.01)

(52) Cooperative Patent Classification (CPC):
C01B 25/45; D01D 5/0007; D01F 9/00;
H01M 4/0471; H01M 4/136; H01M 4/1397;
H01M 4/5825; H01M 4/625; H01M 10/0525;
B82Y 30/00; C01P 2002/74; C01P 2004/03;
C01P 2004/60; C01P 2004/62; D01F 2/08;   (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.12.2023 CN 202311725784

(71) Applicant: Eve Power Co., Ltd.
Jingmen, Hubei 448000 (CN)

(72) Inventors:
• LIU, Shihao
  Jingmen, 448000 (CN)
• LIU, Gang
  Jingmen, 448000 (CN)
• SHI, Zhongyang
  Jingmen, 448000 (CN)
• LIU, Fanfen
  Jingmen, 448000 (CN)
• YUAN, Dingding
  Jingmen, 448000 (CN)

(74) Representative: Murgitroyd & Company
165-169 Scotland Street
Glasgow G5 8PL (GB)

(54) **COMPOSITE LITHIUM IRON PHOSPHATE MATERIAL, AND POSITIVE ELECTRODE AND LITHIUM ION BATTERY USING SAME**

(57)   Disclosed is a composite lithium iron phosphate material, and a positive electrode and a lithium ion battery using the same. The composite lithium iron phosphate material is made of a composition comprising an iron phosphate precursor, a lithium source, and a carbon source, the carbon source covers the iron phosphate and the lithium source, the carbon source includes a synthetic polymer carbon source and a biomass carbon source, and the biomass carbon source includes carbon fibers.

EP 4 570 749 A1

(52) Cooperative Patent Classification (CPC): (Cont.)
H01M 2004/028

**Description**

TECHNICAL FIELD

The present disclosure relates to lithium ion batteries, and in particular, to a composite lithium iron phosphate material, and a positive electrode and a lithium ion battery using the same.

BACKGROUND

Booming of new energy automobiles reveals the great commercial value of lithium ion batteries. Meanwhile, it also puts forward higher requirements for the lithium-ion batteries. Lithium iron phosphate ($LiFePO_4$) has attracted widespread attention due to its advantages. Lithium iron phosphate industry in China is gradually complete and mature with yeas of research and development, which integrates large-scale development of new materials and its commercial application. The lithium iron phosphate may be functionally modified through various means to facilitate its good application in new energy automobile power batteries, starting power supplies, energy storage systems, and the like.
However, the current commercialized carbon-coated lithium iron phosphate has a low tap density (or compaction density), which seriously affects the application of lithium iron phosphate. The increase of tap/compaction density of the lithium iron phosphate material is beneficial to the development of a high-energy-density positive electrode material that is critical for the development of the lithium ion battery. Therefore, there is a need to improve the tap/compaction density of the lithium iron phosphate material.

SUMMARY

The present disclosure provides a composite lithium iron phosphate material, a positive electrode and a lithium ion battery using the same, which can improve the compaction density and increase the specific capacity of the lithium iron phosphate material.
In a first aspect, the present disclosure, in some embodiments, provides a composite lithium iron phosphate material, and the composite lithium iron phosphate material is made of a composition including an iron phosphate precursor, a lithium source, and a carbon source. The carbon source covers the iron phosphate precursor and the lithium source to obtain an orthorhombic composite lithium iron phosphate material. The carbon source includes a synthetic polymer carbon source and a biomass carbon source. The biomass carbon source includes carbon fibers.
In a second aspect, the present disclosure, in some embodiments, provides a positive electrode including a current collector and a positive electrode active coating disposed on a surface of the current collector. The positive electrode active coating includes the composite lithium iron phosphate material as described above, in which the composite lithium iron phosphate material is made of a composition including an iron phosphate precursor, a lithium source, and a carbon source, the carbon source covers the iron phosphate and the lithium source, the carbon source includes a synthetic polymer carbon source and a biomass carbon source, and the biomass carbon source includes carbon fibers.
In a third aspect, the present disclosure, in some embodiments, provides a lithium ion battery including the positive electrode as described above, in which the positive electrode includes a current collector and a positive electrode active coating disposed on a surface of the current collector. The positive electrode active coating includes the composite lithium iron phosphate material, which is made of a composition including an iron phosphate precursor, a lithium source, and a carbon source, the carbon source covers the iron phosphate and the lithium source, the carbon source includes a synthetic polymer carbon source and a biomass carbon source, and the biomass carbon source includes carbon fibers.

ADVANTAGEOUS EFFECTS

According to the embodiments of the present disclosure, carbon coating of the lithium iron phosphate precursor not only forms a porous carbon film on the surface of the lithium iron phosphate particles, but also enhances the conductivity of the lithium iron phosphate, improves the solid-phase interface between the lithium iron phosphate material and the electrolyte, and enhances the electrochemical adsorption performance. It can also promote the formation and growth of lithium iron phosphate particles. In addition, the combination of the synthetic polymer carbon source and the biomass carbon source can improve the compaction density and processability of lithium iron phosphate. The introduction of the synthetic polymer carbon source can reduce free carbon and increase the proportion of bound carbon, thereby increasing the compaction density. The introduction of the biomass carbon source solves the problem of increased processing viscosity due to the large amount of -OH functional groups present in the polymer carbon, thereby improving the processing performance of lithium iron phosphate. The introduction of carbon fibers helps to improve the conductivity and the compaction density of lithium iron phosphate.

BRIEF DESCRIPTION OF THE DRAWINGS

FIG. 1 is an XRD pattern of a lithium iron phosphate material prepared in Example 1 and Comparative Example 1.
FIG. 2 is a SEM image of a lithium iron phosphate material prepared in Example 1 and Comparative Example 1.

DETAILED DESCRIPTION OF EMBODIMENTS

In some embodiments, raw materials for preparing a precursor of lithium iron phosphate includes an iron source and a phosphorus source.

In some embodiments, the iron source and the phosphorus source are provided from iron phosphate ($FePO_4$), in which a molar ratio of Fe to P is 0.96 to 0.99: 1.

In some embodiments, a lithium source includes lithium carbonate ($Li_2CO_3$).

In some embodiments, a process for preparing carbon fibers includes the following: S1. dissolving a plant powder in an organic solvent and obtaining nanofibers by electrostatic pinning; and S2. subjecting the nanofibers to stabilization, pre-oxidation, and carbonization treatment in sequence to obtain the carbon fibers. The preparation of nanofibers using electrostatic spinning helps to improve the particle size and enhance the effect of carbon encapsulation.

In some embodiments, the plant powder includes at least one of rice husk powder or wheat straw powder.

In some embodiments, in S1, the nanofibers have a particle size of (i.e., a diameter of) 50 nm to 200 nm.

In some embodiments, in S2, the stabilization treatment includes a crushing process and/or a dissolving process, and the stabilization treatment is performed at 20°C to 30°C.

In some embodiments, in S2, the pre-oxidation treatment is performed at a reaction temperature of 500°C to 600°C.

In some embodiments, the carbonization treatment is a reaction at heating to 700°C for 5 to 10 hours.

In some embodiments, a biomass carbon source further includes a carbohydrate carbon source, and a mass ratio of a synthetic polymer carbon source: the carbohydrate carbon source: the carbon fibers is 4 to 6: 3 to 5: 1.

In some embodiments, the synthetic polymer carbon source includes polyethylene glycol.

In some embodiments, the carbohydrate carbon source includes glucose.

In some embodiments, the raw materials for preparing the composite lithium iron phosphate material further include an additive. The additive includes a titanium additive or a vanadium additive. The introduction of the titanium additive or the vanadium additive can achieve grain refinement, in which small particles have reduced sizes and increased proportion, improving the low-temperature performance and the rate capability of the lithium iron phosphate material; and provide gradation of large and small particles, leading to increased compaction density of the lithium iron phosphate material.

In some embodiments, in the raw materials for preparing the composite lithium iron phosphate material, a content of the titanium additive is 2,000 ppm to 5,000 ppm, and/or, a content of the vanadium additive is 2,000 ppm to 5,000 ppm.

In some embodiments, the titanium additive includes $TiO_2$.

In some embodiments, the vanadium additive includes ammonium metavanadate ($NH_4VO_3$).

In some embodiments, the composite lithium iron phosphate material comprises 1.1% to 1.6% of carbon, by a mass basis, 1,000 ppm to 2,000 ppm of a titanium element, and 2,000 ppm to 3,000 ppm of a vanadium element.

In some embodiments, a method for preparing a composite lithium iron phosphate material includes: mixing and dispersing a lithium iron phosphate precursor and a carbon source, and transferring the reaction system to an inert gas atmosphere and calcining to obtain the composite lithium iron phosphate material.

In some embodiments, the mixing and dispersion is performed by ball milling for 4 to 6 hours.

In some embodiments, the inert gas includes nitrogen.

In some embodiments, the calcining is performed at a temperature of 650°C to 750°C.

In some embodiments, the composite lithium iron phosphate material has a particle size of 120 nm to 1,500 nm.

Example 1

Preparation of carbon fibers

Rice husk was mechanically ground to prepare rice husk powder, which was then dissolved in an ethyl alcohol solution and stirred for 6 hours to obtain a rice husk powder solution with a concentration of 8% by weight. Then, the rice husk powder solution was injected into an electrostatic spinning machine by a syringe to yield nanofibers with a particle size of (i.e., a diameter of) 100 nm, using an electrostatic spinning process. The nanofibers were placed in an oven and subjected to a stabilization treatment at 25°C for 24 hours, followed by a pre-oxidation treatment at a temperature of 550°C for 1 hour and a carbonization treatment at a temperature of 700°C for 6 hours to obtain carbon fibers. The stabilization treatment includes a crushing treatment and/or a dissolving treatment.

2. Preparation of composite lithium iron phosphate

Iron phosphate and lithium carbonate were accurately weighed into a ball mill in a stoichiometric ratio of 2: 1, $TiO_2$ in a content of 3,000 ppm, $NH_4VO_3$ in a content of 3,000 ppm, 6% by weight of carbon source by the total weight of solid ingredients (polyethylene glycol: glucose: carbon fibers =5: 4: 1, in a stoichiometric ratio) and 40 mL of absolute ethyl alcohol were added thereinto for ball milling for about 5 hours to form a slurry. Then, the slurry was dried in an oven at 80°C, and the dried solid was placed in a resistance furnace under a nitrogen atmosphere, and sintered at a calcination temperature of 710°C for 10 hours to obtain the composite lithium iron phosphate material.

3. Preparation of positive electrode and lithium ion battery

The obtained composite lithium iron phosphate material, Super P (as conductive carbon black), and polyvinylidene fluoride (PVDF) in a mass ratio of 95: 2.5: 2.5 were mixed with an appropriate amount of N-methyl pyrrolidone (NMP) solvent to form an electrode slurry. Then, the electrode slurry was uniformly applied on a surface of an aluminum foil, and dried to yield the positive electrode sheet. 1 mol/L of $LiPF_6$ in ethylene carbonate and dimethyl carbonate was used as an electrolyte, in which a volume ratio of ethylene carbonate to dimethyl carbonate was 1:1.

The prepared positive electrode sheet, a negative electrode sheet (for example, a lithium sheet), and the electrolyte together constitute the lithium ion battery.

Example 2

The preparation of the composite lithium iron phosphate material in Example 2 can be performed with reference to the formulations and method described in Example 1, and the procedures for preparing the composite lithium iron phosphate material, the positive electrode, and the lithium ion battery in Example 2 were consistent with that in Example 1, except that a stoichiometric ratio of polyethylene glycol: glucose: carbon fibers was 6: 3: 1 in the preparation of the composite lithium iron phosphate material.

Example 3

The preparation of the composite lithium iron phosphate material in Example 3 can be performed with reference to the formulations and method described in Example 1, and the procedures for preparing the composite lithium iron phosphate material, the positive electrode, and the lithium ion battery in Example 3 were consistent with that in Example 1, except that a stoichiometric ratio of polyethylene glycol: glucose: carbon fibers was 4: 5: 1 in the preparation of the composite lithium iron phosphate material.

Example 4

The preparation of the composite lithium iron phosphate material in Example 4 can be performed with reference to the formulations and method described in Example 1, and the procedures for preparing the composite lithium iron phosphate material, the positive electrode, and the lithium ion battery in Example 4 were consistent with that in Example 1, except that a stoichiometric ratio of polyethylene glycol: glucose: carbon fibers was 3: 6: 1 in the preparation of the composite lithium iron phosphate material.

Example 5

The preparation of the composite lithium iron phosphate material in Example 5 can be performed with reference to the formulations and method described in Example 1, and the procedures for preparing the composite lithium iron phosphate material, the positive electrode, and the lithium ion battery in Example 5 were consistent with that in Example 1, except that the content of titanium additive was 2,000 ppm, and the content of vanadium additive was 5,000 ppm, in the preparation of the composite lithium iron phosphate material.

Example 6

The preparation of the composite lithium iron phosphate material in Example 6 can be performed with reference to the formulations and method described in Example 1, and the procedures for preparing the composite lithium iron phosphate material, the positive electrode, and the lithium ion battery in Example 6 were consistent with that in Example 1, except that the content of titanium additive was 5,000 ppm, and the content of vanadium additive was 2,000 ppm, in the preparation of the composite lithium iron phosphate material.

Example 7

The preparation of the composite lithium iron phosphate material in Example 7 can be performed with reference to the formulations and method described in Example 1, and the procedures for preparing the positive electrode and the lithium ion battery in Example 7 were consistent with that in Example 1, except that the vanadium additive was replaced with an equal mass part of the titanium additive, in the preparation of the composite lithium iron phosphate material.

Example 8

The preparation of the composite lithium iron phosphate material in Example 8 can be performed with reference to the formulations and method described in Example 1, and the procedures for preparing the positive electrode and the lithium ion battery in Example 8 were consistent with that in Example 1, except that the titanium additive was replaced with an equal mass part of the vanadium additive, in the preparation of the composite lithium iron phosphate material.

Example 9

The preparation of the composite lithium iron phosphate material in Example 9 can be performed with reference to the formulations and method described in Example 1, and the procedures for preparing the composite lithium iron phosphate material, the positive electrode and the lithium ion battery in Example 9 were consistent with that in Example 1, except that the rice husk powder was replaced with an equal mass part of wheat straw powder, in the preparation of the nanofibers.

Example 10

The preparation of the composite lithium iron phosphate material in Example 10 can be performed with reference to the formulations and method described in Example 1, and the procedures for preparing the composite lithium iron phosphate material, the positive electrode and the lithium ion battery in Example 10 were consistent with that in Example 1, except that no stabilization treatment was performed in the preparation of the carbon fibers.

Example 11

The preparation of the composite lithium iron phosphate material in Example 11 can be performed with reference to the formulations and method described in Example 1, and the procedures for preparing the composite lithium iron phosphate material, the positive electrode and the lithium ion battery in Example 11 were consistent with that in Example 1, except that no pre-oxidation treatment was performed in the preparation of the carbon fibers.

Example 12

The preparation of the composite lithium iron phosphate material in Example 12 can be performed with reference to the formulations and method described in Example 1, and the procedures for preparing the composite lithium iron phosphate material, the positive electrode and the lithium ion battery in Example 12 were consistent with that in Example 1, except that the calcination temperature was 600°C in the preparation of the composite lithium iron phosphate material.

Example 13

The preparation of the composite lithium iron phosphate material in Example 13 can be performed with reference to the formulations and method described in Example 1, and the procedures for preparing the positive electrode and the lithium ion battery in Example 13 were consistent with that in Example 1, except that the calcination was carried out in an air atmosphere in the preparation of the composite lithium iron phosphate material.

Comparative Example 1

The procedures for preparing the positive electrode and the lithium ion battery in Comparative Example 1 were consistent with that in Example 1, except that a commercial olivine-type lithium iron phosphate was used to prepare the positive electrode and the lithium ion battery.

Comparative Example 2

The preparation of the composite lithium iron phosphate material in Comparative Example 2 can be performed with reference to the formulations and method described in Example 1, and the procedures for preparing the positive electrode and the lithium ion battery in Comparative Example 2 were consistent with that in Example 1, except that the biomass carbon source was replaced with an equal mass part of the synthetic polymer carbon source in the preparation of the composite lithium iron phosphate material.

Comparative Example 3

The preparation of the composite lithium iron phosphate material in Comparative Example 3 can be performed with reference to the formulations and method described in Example 1, and the procedures for preparing the positive electrode and the lithium ion battery in Comparative Example 3 were consistent with that in Example 1, except that the carbon fiber was replaced with an equal mass part of glucose in the preparation of the composite lithium iron phosphate material.

Comparative Example 4

The preparation of the composite lithium iron phosphate material in Comparative Example 4 can be performed with reference to the formulations and method described in Example 1, and the procedures for preparing the composite lithium iron phosphate material, the positive electrode and the lithium ion battery in Comparative Example 4 were consistent with that in Example 1, except that the rice husk powder was directly calcined to obtain a biomass carbon material, without preparing the carbon fibers. Specifically, the biomass carbon material was prepared by calcining the rice husk powder at 700°C for 6 hours.

Test object

The composite lithium iron phosphate materials prepared in Examples 1 to 13 and Comparative Examples 1 to 4, and corresponding lithium ion batteries.

Test process

Compaction density: 1 g of the sample was weighed and tested using an electronic compression-testing machine at a measurement condition of 30 KN;
Particle size: 0.1 g to 0.2 g of the sample was weighed and dispersed in 500 ml of deionized water, ultrasonically dispersed for 3 min, and then tested using a laser particle size analyzer at a detection angle of 0 to 144°;
Morphology test: SEM testing is performed by using a scanning electron microscope at an acceleration voltage of 10 KV with a magnification of 20,000×;
XRD test: The test was carried out by using an X-ray diffractometer with a test step speed of 4°/min in a range of 10° to 80°;
Gram capacity test: the assembled battery was charged and discharged for 300 cycles at a current of 500 mA, and a discharge capacity for the 300th cycle was recorded. The equation for calculating the gram capacity is shown below:

$$\text{gram capacity} = \left( \frac{\text{Discharge capacity at the 300th cycle}}{\text{Mass of the composite lithium iron phosphate material in the positive electrode sheet}} \right) \times 100\%$$

Test results and analysis

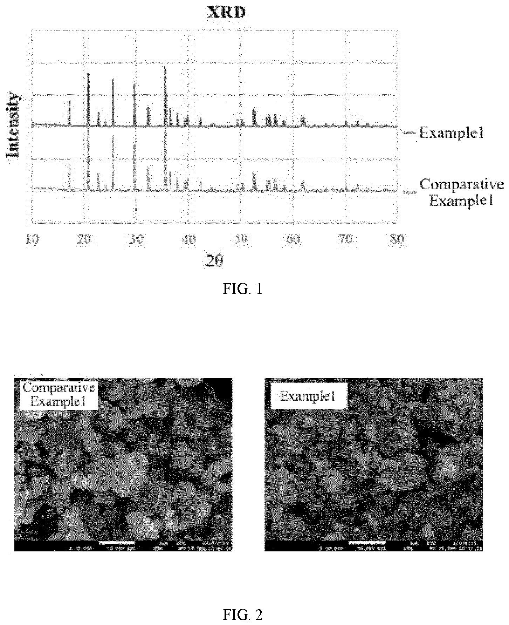

Test results are shown in Table 1. Here, FIG. 1 shows XRD patterns of the lithium iron phosphate materials as prepared in Comparative Example 1 and Example 1. By comparing the XRD results, it can be found that the composite lithium iron phosphate prepared in Example 1 has a major phase of olivine shape, and has a good crystal structure. The SEM results tested at the same magnification of 20,000×, as shown in FIG. 2, shows that the small particles of the lithium iron phosphate material obtained in Example 1 have smaller particle size, facilitating the fractional grading of particles with different sizes. As a result, it can be demonstrated that the preparation method as illustrated in Example 1 according to the embodiments of the present disclosure improves the compaction density and the specific capacity, compared with Comparative Example 1. In addition, it can be confirmed that the addition of the biomass carbon source reduces the content of free carbon, and further improves the compaction density and the specific capacity, by comparing Example 1 with Comparative Example 2. In Comparative Example 3, the performance of the prepared lithium iron phosphate material and the lithium ion battery was decreased due to the absence of carbon fibers. Compared with the carbon fibers obtained by electrostatic spinning in Example 1, the biomass carbon in Comparative Example 4 is derived from rice husks by direct calcination thereof, without introduction of carbon fibers, resulting in a decrease in the compaction density of the composite lithium iron phosphate material and the specific capacity performance of the lithium ion battery.

The difference between the composite lithium iron phosphate materials prepared in Examples 1 to 4 lies only in the different mass ratios of polyethylene glycol, glucose, and carbon fibers. It can be seen from the results that with the rise of the content of the synthetic polymer carbon source, the compaction density and the specific capacity of the composite lithium iron phosphate materials show a trend of fluctuating change. Among them, the composite lithium iron phosphate material prepared in Example 1 has the optimal performance.

From the results of Examples 1 and 5 to 6, it can be seen that the contents of the titanium additive and the vanadium additive bring about an impact on the compaction density. The results of Examples 1 and 7 to 8 show that the titanium additive and the vanadium additive have a synergistic effect, which can achieve grain refinement and fractional grading of large and small particles, and in turn improve the compaction density.

It can be found that, from the results of Examples 1 and 9, the carbon fibers derived from different crop powders or fibers may have an impact on the performance of the composite lithium iron phosphate material and a lithium ion battery using the same. Moreover, the results of Examples 10 to 11 illustrate the method for preparing the carbon fibers also affects their performance.

Compared with Example 1, the compaction density of the composite lithium iron phosphate material and the specific capacity performance of the lithium ion battery are reduced in Example 12 due to the fact that the calcination temperature is adjusted to 600°C during the preparation of the lithium iron phosphate composite material. In addition, the calcination is carried out in air in Example 13, resulting in a decrease in the compaction density and specific capacity of the resulting composite lithium iron phosphate material.

Table 1. Test results of lithium iron phosphate composite materials, positive

electrodes and lithium ion batteries prepared in Examples 1-13 and Comparative Examples 1-4

| No.: | compaction density (g/cm³) | particle size (A)/nm | 25°C, 0.1 C charge gram capacity/(mAh/g) | 0°C, 2 C discharge gram capacity/(mAh/g) |
|---|---|---|---|---|
| Example 1 | 2.578 | 920.3 | 162.5 | 95.4 |
| Example 2 | 2.556 | 1054.9 | 161.3 | 89.6 |
| Example 3 | 2.548 | 1039.8 | 160.9 | 91.7 |
| Example 4 | 2.561 | 997.6 | 160.8 | 88.9 |
| Example 5 | 2.534 | 1072.9 | 162.0 | 93.1 |
| Example 6 | 2.553 | 1069.7 | 161.7 | 93.7 |
| Example 7 | 2.555 | 1057.1 | 160.8 | 87.3 |
| Example 8 | 2.547 | 1026.9 | 161.4 | 86.8 |
| Example 9 | 2.543 | 1032.2 | 160.2 | 87.5 |
| Example 10 | 2.539 | 1102.4 | 159.7 | 87.8 |
| Example 11 | 2.551 | 1002.1 | 159.9 | 89.2 |
| Example 12 | 2.531 | 1089.3 | 159.3 | 88.2 |
| Example 13 | 2.524 | 1068.4 | 159.1 | 89.5 |
| Comparative Example 1 | 2.453 | 1046.8 | 158.2 | 79.7 |
| Comparative Example 2 | 2.352 | 1034.5 | 157.2 | 77.6 |
| Comparative Example 3 | 2.439 | 1018.3 | 158.1 | 80.4 |
| Comparative Example 4 | 2.449 | 1058.6 | 157.5 | 78.9 |

## Claims

1. A composite lithium iron phosphate material, wherein the composite lithium iron phosphate material is made of a composition comprising an iron phosphate precursor, a lithium source, and a carbon source, wherein the carbon source covers the iron phosphate and the lithium source, the carbon source comprises a synthetic polymer carbon source and a biomass carbon source, and the biomass carbon source comprises carbon fibers.

2. The composite lithium iron phosphate material according to claim 1, wherein the carbon fibers are prepared as follows:

   S1. dissolving a plant powder in an organic solvent and obtaining nanofibers by electrostatic pinning; and
   S2. subjecting the nanofibers to stabilization, pre-oxidation, and carbonization treatment in sequence to obtain the carbon fibers.

3. The composite lithium iron phosphate material according to claim 2, wherein the nanofibers prepared in S1 have a particle size of 120 nm to 1,500 nm.

4. The composite lithium iron phosphate material according to claim 2, wherein the stabilization treatment in S2 comprises a crushing process and/or a dissolving process, and the stabilization treatment is performed at 20°C to 30°C.

5. The composite lithium iron phosphate material according to claim 2, wherein the pre-oxidation treatment in S2 is performed at a reaction temperature of 500°C to 600°C.

6. The composite lithium iron phosphate material according to claim 1 or 2, wherein the biomass carbon source comprises a carbohydrate carbon source, and a mass ratio of the synthetic polymer carbon source: the carbohydrate carbon source: the carbon fibers is 4 to 6: 3 to 5: 1.

7. The composite lithium iron phosphate material according to claim 1, wherein the composition comprises an additive selected from at least one of a titanium additive or a vanadium additive.

8. The composite lithium iron phosphate material according to claim 7, wherein the composite lithium iron phosphate material comprises 1.1% to 1.6% of carbon, 1,000 ppm to 2,000 ppm of a titanium element, and 2,000 ppm to 3,000 ppm of a vanadium element, by a mass basis.

9. The composite lithium iron phosphate material according to claim 1, wherein the composite lithium iron phosphate material has a particle size of 120 nm to 1,500 nm.

10. A positive electrode comprising a collector and a positive electrode active coating on a surface of the collector, wherein the positive electrode active coating comprises the composite lithium iron phosphate material according to any one of claims 1 to 9.

11. A lithium ion battery, comprising the positive electrode according to claim 10.

FIG. 1

FIG. 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 192 953 A (SOUNDON NEW ENERGY TECH CO LTD) 11 January 2019 (2019-01-11) | 1,7,9-11 | INV. C01B25/45 |
| A | * paragraph [0001] - paragraph [0153]; claims 1-10 * | 2-6,8 | B82Y30/00 H01M4/04 H01M4/136 |
| A | CN 103 094 565 B (HARBIN INST TECHNOLOGY SHENZHEN GRADUATE SCHOOL) 8 June 2016 (2016-06-08) * paragraph [0001] - paragraph [0042]; claims 1-7 * | 1-11 | H01M4/36 H01M4/58 H01M4/62 H01M10/052 H01M10/0525 H01M4/1397 |
| A | CN 115 893 364 A (HENAN BAILI NEW ENERGY MAT CO LTD) 4 April 2023 (2023-04-04) * paragraph [0001] - paragraph [0061]; claims 1-10 * | 1-11 | D01F9/16 |

TECHNICAL FIELDS SEARCHED (IPC)

C01B
H01M
B82Y
D01F

The present search report has been drawn up for all claims

| Place of search | Date of completion of the search | Examiner |
|---|---|---|
| The Hague | 4 September 2024 | Konstantopoulos, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 24 16 7468

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2024

| Patent document cited in search report | | Publication date | Patent family member(s) | Publication date |
|---|---|---|---|---|
| CN 109192953 | A | 11-01-2019 | NONE | |
| CN 103094565 | B | 08-06-2016 | NONE | |
| CN 115893364 | A | 04-04-2023 | NONE | |

EPO FORM P0459

For more details about this annex : see Official Journal of the European Patent Office, No. 12/82